## Europäisches Patentamt

## European Patent Office

## Office européen des brevets

(19)

(11) Veröffentlichungsnummer: **0 068 223**
**B1**

(12) **EUROPÄISCHE PATENTSCHRIFT**

(45) Veröffentlichungstag der Patentschrift:
**19.02.86**

(21) Anmeldenummer: **82105107.5**

(22) Anmeldetag: **11.06.82**

(51) Int. Cl.⁴: **B 60 N 1/02**, G 05 G 7/08,
F 16 H 35/08

(54) **Verteilergetriebe für einen Fahrzeugsitz.**

(30) Priorität: **19.06.81 EP 81104726**

(43) Veröffentlichungstag der Anmeldung:
**05.01.83 Patentblatt 83/1**

(45) Bekanntmachung des Hinweises auf die Patenterteilung:
**19.02.86 Patentblatt 86/8**

(84) Benannte Vertragsstaaten:
**DE FR GB IT**

(56) Entgegenhaltungen:
**EP - A - 0 067 893**
**CH - A - 205 621**
**DE - B - 2 023 075**
**DE - B - 2 952 030**
**DE - C - 168 698**
**DE - C - 740 086**
**FR - A - 2 446 199**
**GB - A - 207 495**
**GB - A - 386 948**
**US - A - 2 276 258**
**US - A - 4 015 812**

(73) Patentinhaber: **KEIPER RECARO GmbH & Co.,**
**Büchelstrasse 54-58, D-5630 Remscheid 14 (DE)**

(72) Erfinder: **Cremer, Heinz P., Paulstrasse 13,**
**D-5630 Remscheid (DE)**
Erfinder: **Wittig, Werner, Dr. Dipl.-Ing.,**
**Wiehernstrasse 37, D-6752 Winnweiler (DE)**

(74) Vertreter: **Buse, Karl Georg, Dipl.-Phys. et al,**
**Patentanwälte Dipl.-Phys. Buse Dipl.-Phys. Mentzel**
**Dipl.-Ing. Ludewig Unterdörnen 114,**
**D-5600 Wuppertal 2 (DE)**

## Beschreibung

Die Erfindung bezieht sich auf ein Verteilergetriebe für einen Fahrzeugsitz, insbesondere in Kraftfahrzeugen, der über motorisch betätigbare, einzelne Stellvorrichtungen dem Sitzbenutzer und dem Fahrzeug anpassbar ist, wobei ein Motor über ein auf einer Zentralachse gelagertes Antriebszahnrad den verschiedenen, die Stellvorrichtungen des Sitzes betätigenden, abstandsweise um die Zentralachse gruppierten Abtriebswellen des Verteilergetriebes zugeordnet ist, und das Verteilergetriebe ein Schrittgetriebe umfasst, das wenigstens ein mit dem Antriebszahnrad in ständigem Eingriff stehendes Übertragungszahnrad in auswählbaren Schritten in Antriebspositionen mit dem jeweiligen Zahnrad einer der Antriebswellen bringt und das Übertragungszahnrad in dieser Position festhält, ohne es an der Drehung um seine eigene Achse zu hindern.

Bei einem derartigen, aus der DE-B-2 952 030 bekannten Verteilergetriebe wird ein Planetentrieb eingesetzt, dessen Planetenräder mit einem beliebigen Antriebsrad bzw. einer Zahnstange in Eingriff bringbar sind, wobei ein als Schieberhebel bzw. als Schwenkhebel ausgebildetes Steuerteil über einen Betätigungsteil von der einen Antriebslage bzw. Nullage schrittweise in die ausgewählte Antriebslage gebracht werden kann. Dabei besteht der Betätigungsteil im wesentlichen aus einem in einer Schaltkulisse bewegbaren Handhebel, der unmittelbar aus seiner Nulllage bzw. seiner die bisherige Antriebslage charakterisierenden Stellung in die neue ausgewählte Antriebslage gebracht wird. Eine derartige Stelleinrichtung ist nur manuell betätigbar und lässt keine automatisierte, durch Knopfdruck betätigbare Auswahl von Antriebslagen zu. Gemäss einem älteren Vorschlag des Anmelders (EP-A-67893, veröffentlicht am 29.12.82) ist bei einem, einen Planetentrieb umfassenden Verteilergetriebe bereits ein Schrittgetriebe eingesetzt, bei dem die Auswahl der Abtriebswellen in bestimmten, der Konstruktion eigenen Schrittbewegungen erfolgen kann, so dass unter Zuhilfenahme einer gegebenenfalls elektronischen Steuerung die Abtriebspositionen per Knopfdruck aufgefunden werden können. Allerdings beansprucht der dem Schrittgetriebe zugehörige und als Malteserkreuzscheibe ausgebildete Planetenträger der Planetenräder einen relativ grossen Freiraum, so dass relativ grosse Achsabstände zwischen der die Malteserscheibe drehbar lagernden Welle und den jeweiligen Abtriebswellen erforderlich sind, die aufgrund von mit der Verzahnungstechnik zusammenhängenden und konstruktionsbedingten Werten nicht unterschritten werden können. Obschon bei dem bekannten Verteilergetriebe eine relativ kompakte Bauweise möglich ist, so würde sich eine noch kompaktere Bauweise ergeben können, wenn die Abtriebswellen näher um die die Malteserscheibe lagernde Welle gruppiert werden könnten.

Die Aufgabe der vorliegenden Erfindung besteht nunmehr darin, ein Verteilergetriebe der eingangs genannten Art dahingehend zu verbessern, dass die Achsabstände der um das Antriebszahnrad herum angeordneten Abtriebswellen verringert werden können und somit eine kompakte Bauweise des Verteilergetriebes erzielt wird.

Diese Aufgabe ist erfindungsgemäss mit den im Kennzeichen des Hauptanspruches genannten Merkmalen gelöst. Durch die zentrale Anordnung des Übertragungszahnrades auf dem Exzenterabschnitt der auf einer Zentralachse angeordneten Malteserkreuzscheibe in Verbindung mit dem Antrieb des Übertragungszahnrades durch einen Innenzahnkranz lassen sich die Bauteile platzsparend ineinanderschachteln, so dass sich die Abtriebswellen mit den geringstmöglichen Achsabständen um die Zentralachse herum anordnen lassen, und überdies kann der Antriebsmotor auch ausserhalb des zentralen Getriebebereiches angeordnet werden, wodurch auch eine Eingangsgetriebestufe eingesetzt werden kann, die den Einsatz eines gewichtsgünstigen, schnellaufenden Motors zulässt.

Zur Schaffung einer hochuntersetzenden Eingangsgetriebestufe ist der Innenzahnkranz vorzugsweise drehfest mit einem auf der Zentralachse gelagerten Schneckenrad verbunden, das mit einer vom Motor angetriebenen Schnecke in Eingriff steht.

Um die Eingriffsstellen des dem Malteserkreuzgetriebe zugeordneten Übertragungszahnrades mit jeweils den Abtriebswellen zugeordneten Zahnrädern exakt positionieren zu können, weist die Malteserkreuzscheibe vorteilhaft zwischen den gleichmässig am Umfang verteilt angeordneten Transportschlitzen jeweils eine Blockiernut an der mit den Schlitzöffnungen versehenen Umfangsseite auf, wobei in eine der Blockiernuten eine den Transportfinger aufweisende Blockierscheibe eingreift.

Dabei sind die Blockiernuten vorzugsweise in der Umfangsfläche der Malteserkreuzscheibe als zu der Blockierscheibe formschlüssig passende Zylinderabschnitte ausgebildet, und die Blockierscheibe weist an ihrem Umfang eine den Umfang der Malteserkreuzscheibe freigebende Kreisausnehmung auf, wobei in Verlängerung der Mittenlinie zwischen dem Mittelpunkt der Blockierscheibe und dem Scheitelpunkt der Kreisausnehmung an einem Bund der Blockierscheibe der Transportfinger angeordnet ist. Die Erfindung ist in einem Ausführungsbeispiel auf der Zeichnung dargestellt und wird nachfolgend näher erläutert. Es zeigen:

Fig. 1 einen in strichpunktierten Linien angedeuteten Fahrzeugsitz, dessen Sitzrahmen über Stellvorrichtungen im hinteren und vorderen Sitzbereich an mit dem Fahrzeugboden verbundenen Konsolen abgestützt ist – in einer Seitenansicht –,

Fig. 2 den Sitzrahmen in einer Draufsicht, mit den auf einer Längsseite des Sitzes angeordneten Stellvorrichtungen für die Längsverschiebung und die Höhenverstellung des Sitzes, sowie mit dem die Stellvorrichtung betätigenden Verteilergetriebe,

Fig. 3 das erfindungsgemässe Verteilergetriebe mit einem eine Aussenmalteserkreuzscheibe umfassenden Schrittgetriebe, dessen mit den Antriebswellen kuppelbares Zahnrad über ein mit einem Schneckengetriebe verbundenen Innenzahnrad antreibbar ist, in einem Horizontalschnitt nach der Linie III–III von Fig. 4,

Fig. 4  das aus Fig. 3 ersichtliche Verteilergetriebe in einem Vertikalschnitt nach der Linie IV-IV von Fig. 2.

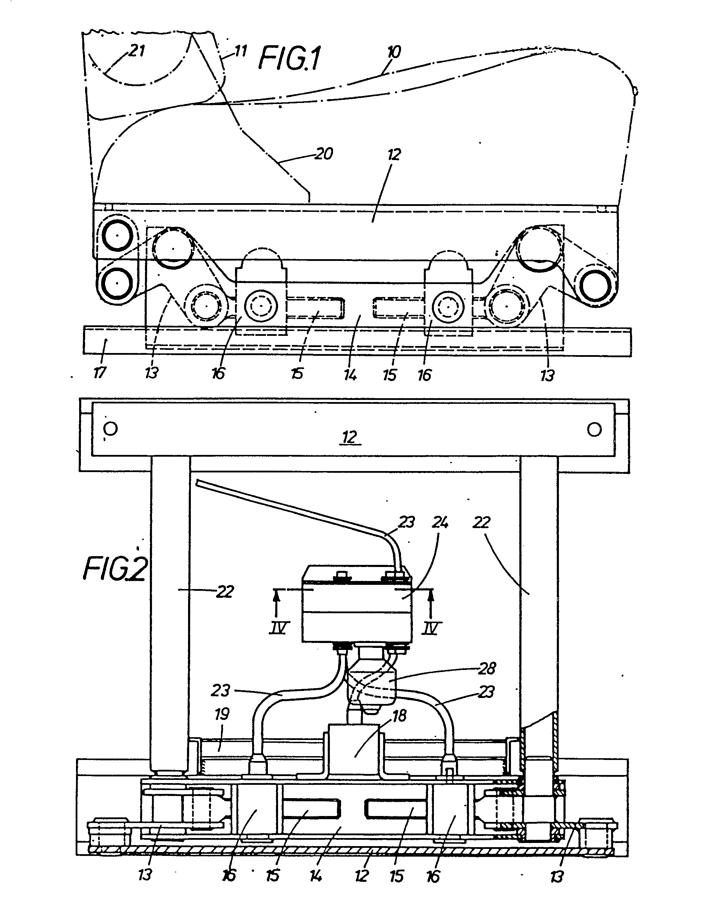

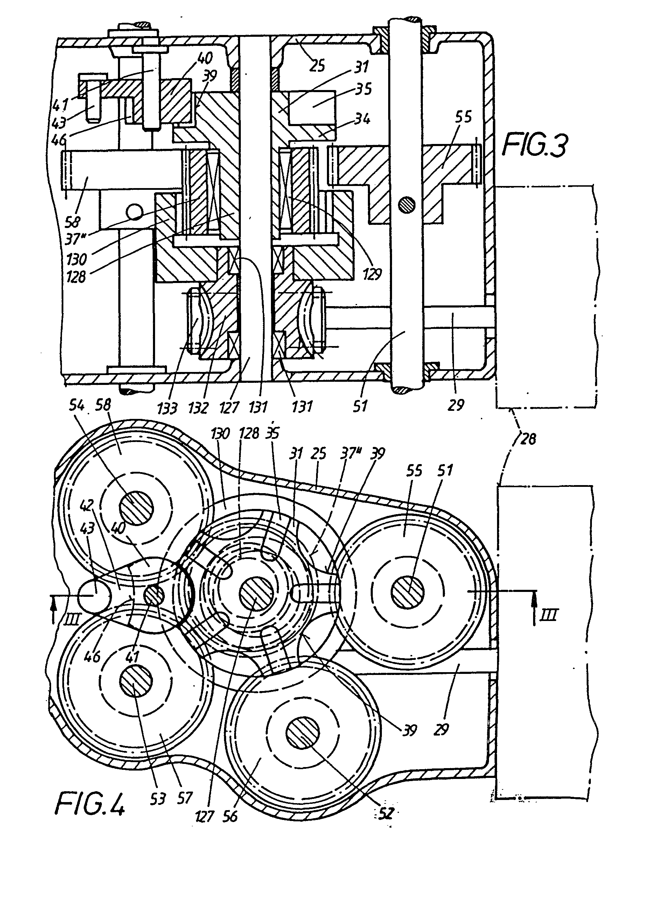

Der in Fig. 1 als eines der möglichen Einbaubeispiele für ein Verteilergetriebe dargestellte, einen Sitzteil 10 und eine Rückenlehne 11 umfassende Fahrzeugsitz ist auf einem Sitzrahmen 12 angeordnet. Dieser Sitzrahmen 12 ist im vorderen und hinteren Sitzbereich über Schwenkstützen 13 an mit am Fahrzeugaufbau festgelegten Führungsschienen 17 verbundenen Konsolen 14 drehgelenkig abgestützt. Während die als Winkelhebel ausgebildeten Schwenkstützen 13 mit ihrem einen Hebelarm an dem Sitzrahmen 12 angelenkt sind, ist ihr anderer Hebelarm mit den Gelenkaugen von Gewindespindeln 15 drehbar verbunden. Diese Gewindespindeln sind von in Stellvorrichtungen 16 bildenden Schneckengetrieben angeordneten Muttern umfasst, wobei jede Mutter an ihrem Aussenumfang mit einer Schneckenradverzahnung versehen ist, in welche z.B. eine in der Stellvorrichtung 16 gelagerte Schnecke eingreift.

Eine weitere Stellvorrichtung 18, die ebenfalls als Schneckentrieb ausgebildet sein kann, dient der Längsverschiebung des Sitzrahmens 12, in dem die als Schneckenrad ausgebildete Spindelmutter eine ortsfest angeordnete Gewindestange 19 umfasst. Zur Verstellung der Rückenlehne 11 mag der zwischen dem Sitzteil 10 und der Rükkenlehne 11 angeordnete Gelenkbeschlag eine ebenfalls motorisch betreibbare, in gestrichelten Linien in Fig. 1 angedeutete Stellvorrichtung 21 umfassen. Die Stellvorrichtung 18 ist wenigstens auf einer Sitzlängsseite angeordnet. Auch die Stellvorrichtungen 16 und 21 können auf lediglich einer Sitzlängsseite angeordnet sein, während die Stellbewegungen an die andere Sitzlängsseite mittels Übertragungswellen 22 weitergegeben werden können. Die Stellvorrichtungen 16, 18 und 21 stehen über flexible Wellen 23 in Drehverbindung mit einem im mittleren Bereich des Sitzrahmens angeordneten Verteilergetriebe 24.

Dieses in den Fig. 3 und 4 detaillierter dargestellte Verteilergetriebe ist im mittleren Bereich seines Getriebegehäuses 25 von einer Zentralachse 127 durchdrungen, auf der eine zum Abtriebsglied 31 des Schrittgetriebes gehörende Malteserkreuzscheibe 34 drehbar gelagert ist. Diese Malteserkreuzscheibe ist durch einen die Zentralachse 127 umfassenden Exzenterabschnitt 128 verlängert, auf welchem ein Übertragungszahnrad 37″ über ein Wälzlager 129 drehbar angeordnet ist. Die Malteserkreuzscheibe 34 weist auf ihrer vom Exzenterabschnitt 128 wegweisenden Seite ebenfalls gleichmässig am Umfang verteilt, radial verlaufende, nach aussen offene Transportschlitze 35 auf, deren Anzahl beispielsweise 5 beträgt, und zwischen denen jeweils eine Blokkiernut 39 angeordnet ist. In diese Blockiernut 39 greift eine gleichzeitig als Schaltrad fungierende Blockierscheibe 40 ein, die auf einer am Gehäuse 25 gehalterten Drehachse 41 gelagert ist. Die Blockierscheibe 40 weist an ihrem Bund 42 einen Transportfinger 43 zum Eingriff in die Transportschlitze 35 der Malteserkreuzscheibe 34 auf. Als Antrieb der als Schaltrad fungierenden Blockierscheibe 40 mag ein mit der Blockierscheibe über ein nicht dargestelltes Getriebevorgelege, verbundener, separat ansteuerbarer Hilfsmotor Verwendung finden, der ebenfalls nicht näher dargestellt wurde. Der Transportfinger 43 der Blockierscheibe 40 ist von einer Kreisausnehmung 46 umgeben, die bei in einen Transportschlitz 35 eindringenden Transportfinger 43 den Aussenumfang der Malteserkreuzscheibe ungehindert passieren lässt. Mit dem Übertragungsrad 37″ ist ein Innenzahnkranz 130 ständig im Eingriff, der drehfest mit einem auf der Zentralachse 127 drehbar über Wälzlager 131 gelagerten Schneckenrad 132 verbunden ist. Mit dem Schneckenrad 132 kämmt eine Schnecke 133, die in drehfester Verbindung mit dem Wellenstumpf 29 des Hauptantriebsmotors 28 steht, der am Gehäuse 25 angeflanscht sein mag.

Um das Übertragungszahnrad 37″ herum sind Abtriebswellen 51, 52, 53 und 54 gruppiert, die im Gehäuse 25 drehgelagert sind und die in einem solchen Teilungswinkel zueinander angeordnet sind, der bei dem dargestellten Ausführungsbeispiel bei drei aufeinanderfolgenden Abtriebswellen jeweils dem Teilungswinkel der Transportschlitze 35 der Malteserkreuzscheibe 34 entspricht und einmal zwischen zwei Abtriebswellen mit dem zweifachen Teilungswinkel zwischen zwei benachbarten Transportschlitzen übereinstimmt. Mit jeder Abtriebswelle 51, 52, 53, 54 ist ein Zahnrad 55, 56, 57, 58 drehfest verbunden und derart neben dem Innenzahnkranz 130 angeordnet, dass das Übertragungszahnrad 37″ je nach Stellung des Schrittgetriebes abwechselnd mit jedem der Zahnräder 55 bis 58 in Eingriff bringbar ist. Der Abstand der jeweiligen Abtriebswelle 51 bis 54 vom Mittelpunkt der Zentralachse 127 entspricht dabei der Summe von Wälzkreisradius des Übertragungszahnrades 37″, Wälzkreisradius des jeweils damit in Eingriff befindlichen Zahnrades 55 bis 58 und Exzentermass des Exzenterabschnittes 130 gegenüber der Mitte der Zentralachse.

Wenn nun eine der Stellvorrichtungen 16, 17 oder 21 des Sitzes in Betrieb genommen werden soll, so erfolgt zunächst über eine nicht dargestellte Steuerung eine Positionierung des Schrittschaltgetriebes. Dabei wird zunächst der mit der Blockierscheibe 40 in Drehverbindung stehende Hilfsmotor eingeschaltet, der so lange läuft, bis die als Schaltrad fungierende Blockierscheibe 40 das als Zwischenrad dienende Übertragungszahnrad 37″ in eine ausgewählte Position in Zuordnung zu der mit der betreffenden Stellvorrichtung verbundenen Abtriebswelle bzw. einem darauf angeordneten Zahnrad gebracht hat. Bei dem in den Fig. 3 und 4 dargestellten Ausführungsbeispiel ist eine solche Positionierung erreicht, bei der das Übertragungszahnrad 37″ mit dem Zahnrad 58 der Abtriebswelle 54 in Eingriff ist. Diese Positionierung des Antriebes erfolgt durch entsprechend gesteuerte Drehung der Blockierscheibe 40. Bei jeweils einer Umdrehung der Blockierscheibe 40 greift deren Transportfinger 43 in einen Transportschlitz 35 der Malteserkreuzscheibe 34 und dreht diese um den Teilungswinkel zwischen zwei Transportschlitzen weiter. Dadurch wird über den Exzenterabschnitt 128 die Eingriffstelle des auf dem Exzenterabschnitt drehbar gelagerten Übertragungszahnrades 37″ um den gleichen Drehwinkel verlagert, so dass das Übertragungszahnrad 37″ je nach Anzahl der Umdrehungen der Blockierscheibe 40 mit dem ausgewählten Zahnrad einer Abtriebswelle in Eingriff bringbar ist.

Der Hauptantriebsmotor wird erst danach, wenn der Hilfsmotor abgeschaltet ist und die Blockierscheibe 40 die aus Fig. 4 ersichtliche Blockierlage in der Blockiernut 39 eingenommen hat, eingeschaltet. Der Hauptantriebsmotor 28 treibt dann über die Schnecke 133 das Schneckenrad 132 und den damit verbundenen Innenzahnkranz 130. Dieser ist im ständigen Eingriff mit dem auf dem Exzenterabschnitt 128 gelagerten Übertragungszahnrad 37″, dessen Zahnbreite etwa doppelt so gross ist wie die Zahnbreite des Innenzahnkranzes 130. Die Malteserkreuzscheibe 34 und der damit verbundene Exzenterabschnitt 128 sind derart eingestellt, dass das aus dem Innenzahnkranz herausragende Übertragungszahnrad mit dem Zahnrad 58 der Abtriebswelle 54 im Eingriff ist und diese somit bei Drehung des Übertragungszahnrades 37″ angetrieben ist. Je nach Stellung der Malteserkreuzscheibe kann jeweils eines der Zahnräder 55, 56, 57, 58 mit dem Übertragungszahnrad 37″ im Eingriff sein und die zugehörige Stellvorrichtung antreiben.

## Patentansprüche

1. Verteilergetriebe für einen Fahrzeugsitz, insbesondere in Kraftfahrzeugen, der über motorisch betätigbare, einzelne Stellvorrichtungen (16, 18, 21) dem Sitzbenutzer und dem Fahrzeug anpassbar ist, wobei ein Motor (28) über ein auf einer Zentralachse (127) gelagertes Antriebszahnrad (130) den verschiedenen, die Stellvorrichtungen des Sitzes betätigenden, abstandsweise um die Zentralachse (127) gruppierten Abtriebswellen (51 bis 54) des Verteilergetriebes zugeordnet ist und das Verteilergetriebe ein Schrittgetriebe (31, 40) umfasst, das wenigstens ein mit dem Antriebszahnrad (130) in ständigem Eingriff stehendes Übertragungszahnrad (37″) in auswählbaren Schritten in Antriebspositionen mit dem jeweiligen Zahnrad (55 bis 58) einer Abtriebswellen bringt und das Übertragungszahnrad (37″) in dieser Position festhält, ohne es an der Drehung um seine eigene Achse zu hindern, dadurch gekennzeichnet, dass das als Malteserkreuzgetriebe (31, 40) ausgebildete Schrittgetriebe ein eine Malteserkreuzscheibe (34) und einen Exzenterabschnitt (128) umfassendes, auf der Zentralachse (127) drehbar gelagertes Abtriebsglied (31) aufweist, auf dessen Exzenterabschnitt (128) das Übertragungszahnrad (37″) frei drehbar gelagert ist, dass das Antriebszahnrad von einem Innenzahnkranz (130) gebildet ist und dass die Malteserkreuzscheibe (34) nach aussen offene, radial verlaufende Transportschlitze (35) aufweist, in welche ein mit einer Blockiervorrichtung (39, 40) gekoppelter Transportfinger (43) bei willkürlicher Betätigung eingreift.

2. Verteilergetriebe nach Anspruch 1, dadurch gekennzeichnet, dass der Innenzahnkranz (130) drehfest mit einem auf der Zentralachse (127) gelagerten Schneckenrad (132) verbunden ist, das mit einer vom Motor (28) getriebenen Schnecke (133) in Eingriff steht.

3. Verteilergetriebe nach Anspruch 1 oder 2, dadurch gekennzeichnet, dass zwischen den gleichmässig am Umfang verteilt angeordneten Transportschlitzen (35) jeweils eine Blockiernut (39) auf der mit den Schlitzöffnungen versehenen Umfangsseite angeordnet ist, wobei in einer der Blockiernuten (39) eine den Transportfinger (43) aufweisende Blockierscheibe (40) eingreift.

4. Verteilergetriebe nach Anspruch 3, dadurch gekennzeichnet, dass die Blockiernuten (39) in der Umfangsfläche der Malteserkreuzscheibe (34) als zu der Blockierscheibe (40) formschlüssig passende Zylinderabschnitte ausgebildet sind und die Blockierscheibe (40) an ihrem Umfang eine den Umfang der Malteserkreuzscheibe (34) freigebende Kreisausnehmung (46) aufweist, wobei in Verlängerung der Mittellinie zwischen dem Mittelpunkt der Blockierscheibe (40) und dem Scheitelpunkt der Kreisausnehmung (46) an einem Bund (42) der Blockierscheibe der Transportfinger (43) angeordnet ist.

## Revendications

1. Transmission intermédiaire pour un siège de véhicule, notamment pour véhicule automobile, qui est adaptable, par l'intermédiaire de dispositifs de manœuvre distincts motorisés (16, 18, 21) à l'utilisateur du siège et au véhicule, un moteur (28) étant associé par l'intermédiaire d'une roue d'engrenage menant (130) monté sur un arbre central (127) aux différents arbres menés (51 à 54) de la transmission intermédiaire qui actionnent les dispositifs de manœuvre du siège et qui sont répartis à intervalles autour de l'arbre central (127) et la transmission intermédiaire comportant une transmission à impulsions (31, 40) qui amène au moins une roue d'engrenage de transmission (37″), constamment en prise avec la roue d'engrenage menant (130), par échelons sélectionnables jusque dans des positions d'accouplement avec la roue d'engrenage correspondante (55 à 58) d'un des arbres menés et qui maintient la roue d'engrenage de transmission (37″) dans cette position sans l'empêcher de tourner autour de son propre axe, caractérisé en ce que la transmission à impulsions agencée sous forme d'une transmission à croix de malte (31, 40) comporte un organe menant (31) monté de façon tournante sur l'arbre central (127) et comportant un disque à croix de malte (34) et une partie excentrique (128) sur laquelle est monté de façon librement tournante la roue d'engrenage de transmission (37″), en ce que l'engrenage menant est constitué par une couronne à denture intérieure (130) et en ce que le disque à croix de malte (34) comporte des fentes de transport orientées radialement, ouvertes vers l'extérieur et dans lesquelles s'engage un doigt de transport (43), accouplé à un dispositif de blocage (39,40), lors d'un actionnement effectué à volonté.

2. Transmission intermédiaire selon la revendication 1, caractérisé en ce que la couronne à denture intérieure (130) est reliée en rotation à une roue tangente (132) montée rotative sur l'arbre central (127) et qui est en prise avec une vis sans fin (133) entraînée par le moteur (28).

3. Transmission intermédiaire selon la revendication 1 ou 2, caractérisé en ce qu'il est prévu entre les fentes de transport (35), réparties uniformément sur la périphérie, une rainure de blocage respective (39) sur le côté périphérique pourvue des ouvertures des fentes, un disque de blocage (40) comportant le doigt de transport (43) venant s'engager dans une des rainures de blocage (39).

4. Transmission intermédiaire selon la revendication 3, caractérisé en ce que les rainures de blocage (39) sont ménagées dans la surface périphérique du disque à croix de malte (34) sous fourme de segments de cylindre s'adaptant par conjugaison de formes au disque de blocage (40) qui comporte, à sa périphérie, un évidement circulaire (46) dégageant la périphérie du disque à croix de malte (34), le doigt de transport (43) étant disposé sur un collet (42) du disque de blocage, sur le prolongement de la droite reliant le centre du disque de blocage (40) au sommet de l'évidement circulaire (46).

**Claims**

1. A distributor gear train for a vehicle seat, in particular in motor vehicles, which can be adapted to the user of the seat and to the vehicle via motor-actuated individual control devices (16, 18, 21) in which a motor (28) is associated via a drive gear (130) supported on a central axis (127) with the different driven shafts (51 to 54) of the distributor gear train, actuating the control devices of the seat and arranged at a distance around the central axis (127), and the distributor gear train comprises a stepping gear (31, 40) which causes at least one transmission gear (37″) in constant mesh with the drive gear (130) in selected steps to assume drive positions with the respective gear (55 to 58) of one of the driven shafts and retains the transmission gear (37″) in this position without preventing its rotation about its own axis, characterized in that the stepping gear designed as Maltese cross gear (31, 40) has a driven element (31) surrounding a Maltese cross disk (34) and an eccentric section (128), and rotatably supported on the central axis (127), on whose eccentric section (128) the transmission gear (37″) is supported for free rotation, that the drive gear is formed of an internal gear rim (130) and that the Maltese cross disk (34) has outwardly open transport slots (35) extending radially, into which a transport finger (43) coupled with a locking device (39, 40) engages upon arbitrary actuation.

2. A distributor gear train as claimed in the claim 1, characterized in that the internal gear rim (130) is fixedly connected for rotation with a worm gear (132) supported on the central axis (127), which is in mesh with a worm (133) driven by the motor (28).

3. A distributor gear train as claimed in the claim 1 or 2, characterized in that one locking groove (39) each is arranged on the peripheral side provided with the slot openings between the transport slots (35) distributed uniformly at the circumference, a locking disk (40) provided with the transport finger (43) engaging in one of the locking grooves (39).

4. A distributor gear train as claimed in the claim 3, characterized in that the locking grooves (39) are formed in the peripheral area of the Maltese cross disk (34) as cylinder sections in form fit with the locking disk (40), and the locking disk (40) has a circular recess (46) at its periphery releasing the circumference of the Maltese cross disk (34), the transport finger (43) being arranged at a shoulder (42) of the locking disk in the extension of the center line between the center point of the locking disk (40) and the apex of the circular recess (46).

0 068 223

FIG.1

FIG.2

7

FIG.3

FIG.4